# EUROPÄISCHE PATENTSCHRIFT

(11) **EP 2 514 184 B1**
(45) Veröffentlichungstag und Bekanntmachung des Hinweises auf die Patenterteilung: **11.09.2013**
(21) Anmeldenummer: 10784978.8
(22) Anmeldetag: 17.11.2010
(51) Int. Cl.: H04M 1/2745, G01C 21/36, G06F 3/0482, H04M 1/60

(54) **VERFAHREN UND RECHNER ZUM DARSTELLEN VON INFORMATIONEN AUF EINER ANZEIGEVORRICHTUNG EINES FAHRZEUGS**
METHOD AND PROCESSOR FOR REPRESENTING INFORMATION ON A DISPLAY DEVICE OF A VEHICLE
PROCÉDÉ ET ORDINATEUR POUR VISUALISER DES INFORMATIONS SUR UN DISPOSITIF D'AFFICHAGE D'UN VÉHICULE

(30) Priorität: 17.12.2009 DE 102009058727
(43) Veröffentlichungstag der Anmeldung: 24.10.2012
(73) Patentinhaber: Bayerische Motoren Werke Aktiengesellschaft, 80809 München (DE)
(72) Erfinder: DAUDE, Rainer, 85354 Freising (DE); SAAD, Alexandre, 85386 Eching (DE); SCHMITT, Thorsten, 85521 Ottobrunn (DE)
(86) Internationale Anmeldenummer: PCT/EP2010/006989
(87) Internationale Veröffentlichungsnummer: WO 2011/082731

(56) Entgegenhaltungen:
- EP-A1- 1 832 846
- WO-A1-2006/067541
- DE-A1- 10 305 168

## Beschreibung

Die Erfindung betrifft ein Verfahren zum Darstellen von Informationen auf einer Anzeigevorrichtung eines Fahrzeugs, auf der die Informationen in Form einer Liste bei gegebener Größe der Anzeigevorrichtung und vorgegebener Art und Größe der Schrift mit einer ersten Anzahl an Listeneinträgen darstellbar sind, wobei jeder Listeneintrag eine zweite Anzahl an maximal darstellbaren Zeichen aufweist. Die Erfindung betrifft ferner einen Rechnerzur Steuerung einer Anzeigevorrichtung eines Fahrzeugs.

Bei Anzeigevorrichtungen eines Fahrzeugs besteht das grundsätzliche Problem, dass für die Listendarstellung von Telefonbucheinträgen, Multimediadateien, Navigationseinträgen usw. ein nur begrenzter Anzeigebereich zur Darstellung der Informationen zur Verfügung steht. Aufgrund gesetzlicher Vorgaben und Selbstverpflichtungen der Hersteller der Fahrzeuge müssen in Textform dargestellte Informationen eine Mindestgröße aufweisen. Ferner dürfen die Texte nicht animiert werden, d.h. in einer Laufschrift zur Anzeige gebracht werden.

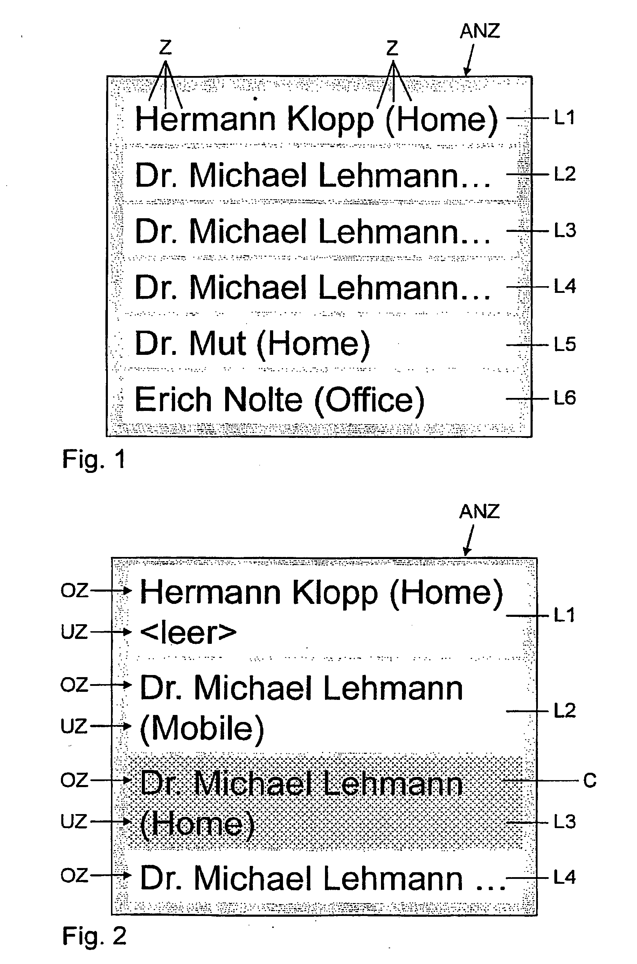

Bei Listeneinträgen, welche eine Anzahl an Zeichen aufweisen, die größer als die in einer Zeile darstellbare Anzahl an Zeichen ist, besteht daher manchmal das Problem, dass mehrere Listeneinträge mit gleichem Anfang nicht mehr unterscheidbar sind. Dies geht beispielhaft aus dem in Fig. 1 gezeigten Beispiel hervor. Dargestellt ist ein Anzeigebereich einer Anzeigevorrichtung ANZ, z.B. eines zentralen Bildschirms im Fahrzeug (sog. MMI der Head Unit), einer Anzeige im Kombiinstrument, einem Headup-Display oder von Bildschirmen im Rearseat-Bereich, in welchem beispielhaft sechs Listeneinträge L1, L2, L3, L4, L5, L6 einer Telefonliste dargestellt sind. Beispielhaft kann für jeden Listeneintrag eine Anzahl von ca. 20 darstellbaren Zeichen Z zur Anzeige gebracht werden. Die Anzahl der Listeneinträge sowie die Anzahl der Zeichen pro Listeneintrag hängt von der Größe des Anzeigebereichs der Anzeigevorrichtung ANZ und der Art und Größe der Schrift ab.

Wie der Fig. 1 ohne Weiteres zu entnehmen ist, sind drei Listeneinträge L2, L3, L4 für "Dr. Michael Lehmann" dargestellt. Durch die nach dem Namen folgenden "..." wird dem Nutzer der Anzeigevorrichtung visualisiert, dass dem Namen weitere Informationen folgen. Im vorliegenden Ausführungsbeispiel sind für Dr. Michael Lehmann drei unterschiedliche Telefonnummern verfügbar: im Listeneintrag L2 die Nummer eines Mobilfunktelefons ("(Mobile)"), für den Listeneintrag L3 eine private Telefonnummer ("(Home)") und für den Listeneintrag L4 eine geschäftliche Telefonnummer ("(Office)"). Aufgrund der Kürze der Namen sind die Listeneinträge L1 für "Hermann Klopp (Home)", der Listeneintrag L5 für "Dr. Mut (Home)" und der Listeneintrag L6 für "Erich Nolte (Office)" ohne Weiteres lesbar. Die Auswahl eines gesuchten Telefonbucheintrags für "Dr. Michael Lehmann" ist für einen Nutzer eines Fahrzeugs, insbesondere während der Fahrt, nicht ohne Weiteres möglich.

Die gleiche Problematik besteht in ähnlicher Weise auch bei der Darstellung von Künstlern und Musiktiteln bei MP3-Audiodateien, bei Navigations-Adressen, bei Internetadressen oder bei Betriebsanleitungen usw.

Um den Nutzer dennoch in die Lage zu versetzen, die Listeneinträge unterscheiden zu können, sind folgende, in den Figuren 2 bis 4 dargestellte Lösungen bekannt.

Gemäß der in Fig. 2 gezeigten Variante werden die Listeneinträge grundsätzlich mehrzeilig dargestellt, wenn wenigstens ein Listeneintrag eine größere Anzahl an Zeichen als die auf dem Anzeigebereich darstellbaren Zeichen aufweist. Im Ausführungsbeispiel der Fig. 2 sind für jeden Listeneintrag L1, L2, L3, L4 jeweils zwei Zeilen OZ, UZ vorgesehen. Dies hat unter anderem zur Folge, dass bei solchen Listeneinträgen, welche an sich vollständig in einer Zeile darstellbar sind, eine Leerzeile erzeugt wird. Dies ist exemplarisch für den Listeneintrag L1 dargestellt. Aufgrund der begrenzten, zur Verfügung stehenden Zeilenanzahl ist diese Darstellung jedoch sehr unübersichtlich, da im Vergleich zur einzeiligen Listendarstellung eine geringere Anzahl an Listeneinträgen visualisiert werden kann.

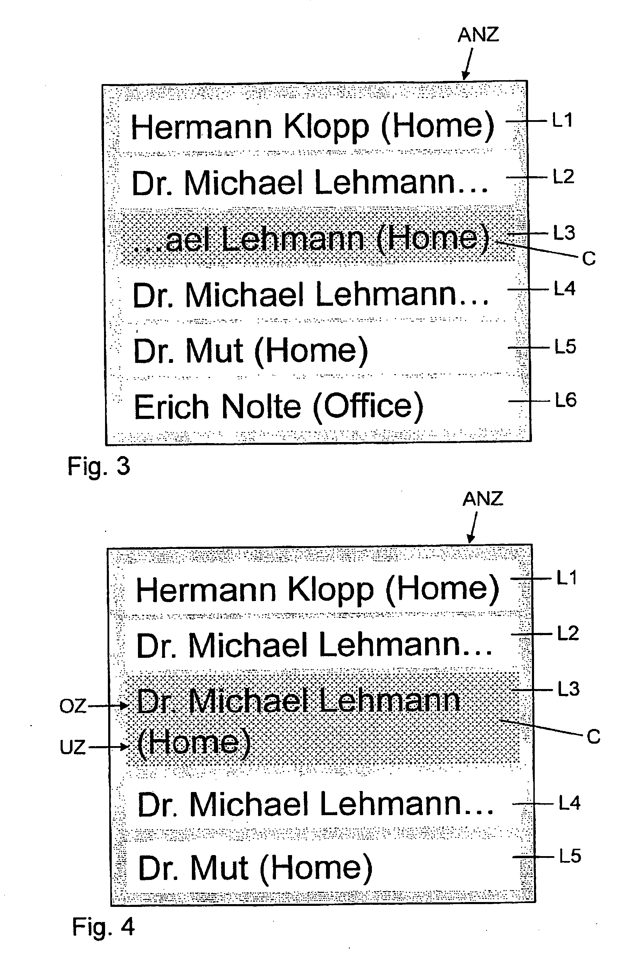

Fig. 3 zeigt einen bekannten Listeneintragsende-Sprung des aktiv ausgewählten Listeneintrags. Diese Vorgehensweise ist auch unter dem Begriff "Flippen" bekannt. Im Ausführungsbeispiel ist der grau hinterlegte und mit C gekennzeichnete Listeneintrag L3 durch ein Bedienelement der Anzeigevorrichtung ANZ aktiv ausgewählt. Sobald der Listeneintrag ausgewählt ist, wird die Zeichenfolge des Listeneintrags vom Ende her dargestellt, wodurch der Beginn der Zeichenfolge des Listeneintrags L3 ausgeblendet wird. Dies ist durch die einleitenden "..." dargestellt. Nachteilig an dieser Darstellung ist, dass zur Visualisierung der vollständigen Information des Listeneintrags eine aktive Auswahl des Listeneintrags notwendig ist. Werden durch einen Nutzer der Anzeigevorrichtung hintereinander mehrere Listeneinträge ausgewählt, so führt dies zu unruhigen Sprungeffekten bei den jeweils aktiv ausgewählten Listeneinträgen, welche in einem Fahrzeug unerwünscht sind.

Fig. 4 zeigt eine sog. dynamische Mehrzeiligkeit eines aktiv ausgewählten Listeneintrags. Wiederum ist der grau hinterlegte und mit C gekennzeichnete Listeneintrag L3 ausgewählt. Hierdurch wird die Information des Listeneintrags mehrzeilig dargestellt, sofern die Anzahl der Zeichen des Listeneintrags größer als die auf dem Anzeigebereich darstellbare Anzahl an Zeichen ist. Auch hier ergibt sich der Nachteil von Sprungeffekten, wenn der Nutzer nacheinander eine Mehrzahl an Listeneinträgen auswählt. Darüber hinaus ergibt sich für den Nutzer auch kein Gesamtüberblick der aktuell dargestellten Listeneinträge, da lediglich der aktiv ausgewählte Listeneintrag lesbar ist.

Die Offenlegungsschrift DE 103 05 168 A1 offenbart eine Benutzerschnittstelle zur Bedienung eines Mobiltelefons, insbesondere in Kraftfahrzeugen. Zum Darstellen von Informationen in Form von Telefonbucheinträgen auf einer Anzeigevorrichtung eines Fahrzeugs werden einzelne Telefonbucheinträge angezeigt. Durch Betätigung eines Scrollmittels ist es möglich, durch eine virtuelle Liste zu scrollen. Weist ein Eintrag eine Anzahl an Zeichen auf, die größer als die in einer Zeile darstellbare Anzahl an Zeichen ist, so wird eine verkürzte Version des Eintrags angezeigt.

Die Druckschrift EP 1 832 846 A1 offenbart ein Navigationsgerät zur Benutzung in einem Fahrzeug. Gespeicherte Adressbucheinträge werden als Liste angezeigt.

Die Druckschrift WO 2006/067541 A1 offenbart ein Mobilfunktelefon, wobei ein Telefonbuch in Form einer Liste angezeigt wird und wobei Einträge, die länger als die darstellbare Anzahl an Zeichen in einer Zeile sind, verkürzt werden.

Es ist daher Aufgabe der vorliegenden Erfindung, ein Verfahren anzugeben, mit dem Informationen auf einer Anzeigevorrichtung eines Fahrzeugs verbessert dargestellt werden, so dass der Fahrer bei geringer Ablenkung Listeneinträge mit einer hohen Übersichtlichkeit wahrnehmen kann: Es ist weiterhin Aufgabe der vorliegenden Erfindung, einen Rechner anzugeben, welcher eine optimierte Steuerung einer Anzeigevorrichtung eines Fahrzeugs ermöglicht.

Diese Aufgaben werden gelöst durch ein Verfahren gemäß den Merkmalen des Patentanspruchs 1 sowie einen Rechner gemäß den Merkmalen des Patentanspruchs 17. Vorteilhafte Ausgestaltungen ergeben sich jeweils aus den abhängigen Patentansprüchen.

Die Erfindung schafft ein Verfahren zum Darstellen von Informationen auf einer Anzeigevorrichtung eines Fahrzeugs, auf der die Informationen in Form einer Liste bei gegebener Größe der Anzeigevorrichtung und vorgegebener Art und Größe der Schrift mit einer ersten Anzahl an Listeneinträgen darstellbar sind, wobei jeder Listeneintrag eine zweite Anzahl an maximal darstellbaren Zeichen aufweist. Für die aktuell auf der Anzeigevorrichtung darzustellende erste Anzahl an Listeneinträgen wird ermittelt, ob jeweils zwei aufeinander folgende Listeneinträge jeweils eine Anzahl an Zeichen aufweisen, die größer als die zweite, darstellbare Anzahl des betreffenden Listeneintrags ist. Im positiven Fall, d.h. wenn zwei aufeinander folgende Listeneinträge nicht vollständig in einer jeweiligen Zeile der Anzeigevorrichtung darstellbar sind, wird die darstellbare zweite Anzahl an Zeichen der aufeinander folgenden Listeneinträge hinsichtlich ihrer Unterscheidbarkeit verglichen. Bei festgestellter Nicht-Unterscheidbarkeit der zwei aufeinander folgenden und aktuell auf der Anzeigevorrichtung darzustellenden Listeneinträge wird eine Unterscheidbarkeit dieser beiden Listeneinträge hergestellt.

Das der Erfindung zu Grunde liegende Prinzip besteht darin, eine Optimierung der Darstellung eines oder mehrerer Listeneinträge ausschließlich im Bedarfsfall vorzunehmen, d.h. wenn zwei oder mehr aufeinander folgende Listeneinträge im Bereich ihrer sichtbaren Zeichenfolge nicht mehr unterscheidbar sind. Hierdurch ergibt sich eine geringere Ablenkung des Fahrers, da bei gegebener Größe der Anzeigevorrichtung und gegebener Art und Schrift eine größere Anzahl an Informationen (d.h. Listeneinträgen) bei guter Lesbarkeit im Vergleich zu den eingangs beschriebenen Varianten darstellbar ist.

Durch das erfindungsgemäße Verfahren wird damit eine differenzierende Information bei begrenztem Platz geschaffen, wo dies aufgrund der darzustellenden Informationen erforderlich ist.

Zweckmäßigerweise erfolgt eine Änderung der Darstellung jeweiliger Listeneinträge nur bei solchen Listeneinträgen, bei denen bei zumindest zwei aufeinander folgenden und aktuell auf der Anzeigevorrichtung darzustellenden Listeneinträgen eine Nicht-Unterscheidbarkeit dargestellt wird. Mit anderen Worten bedeutet dies, dass bei zwei aufeinander folgenden Listeneinträgen, bei denen eine Unterscheidbarkeit im Bereich der zweiten Anzahl an Zeichen gegeben ist, keine Veränderung der Anzeige zumindest eines der Listeneinträge vorgenommen wird. Hierdurch wird die bedarfsgerechte Optimierung der darzustellenden Listeneinträge sichergestellt.

Eine Nicht-Unterscheidbarkeit liegt vor, wenn im Bereich der zweiten Anzahl an Zeichen der aufeinander folgenden Listeneinträge eine syntaktische Unterscheidbarkeit vorgegebener Art besteht. Dies ist beispielsweise dann der Fall, wenn ein einzelnes, die Wortbedeutung oder Aussprache des dargestellten Worts nicht veränderndes Zeichen unterschiedlich ist. Alternativ liegt eine Nicht-Unterscheidbarkeit dann vor, wenn im Bereich der zweiten Anzahl an Zeichen der aufeinander folgenden Listeneinträge eine semantische Unterscheidbarkeit besteht. Bei der semantischen Unterscheidbarkeit wird darauf abgestellt, ob ein auf der Anzeigevorrichtung darzustellendes Wort verständlich ist oder nicht. Hierdurch ergibt sich ein besserer Überblick über die in der Liste dargestellten Listeneinträge.

Eine weitere Ausgestaltung sieht vor, dass zur Herstellung der Unterscheidbarkeit der aufeinander folgenden und im Bereich der zweiten Anzahl an Zeichen nicht-unterscheidbaren Listeneinträgen diese betreffenden Listeneinträge in ihrer Darstellung verändert werden. Es findet somit, unabhängig davon, ob bzw. welcher Listeneintrag ausgewählt ist, eine Optimierung auf alle sichtbaren, nicht-unterscheidbaren Listeneinträge statt.

Beispielsweise werden in einer Variante die betreffenden Listeneinträge jeweils mehrzeilig dargestellt.

In einer alternativen Variante werden zumindest manche der betreffenden Listeneinträge verkürzt dargestellt. Zur Verkürzung der betreffenden Listeneinträge wird ein jeweiliger Listeneintrag in eine nicht-unterscheidbare Zeichenfolge und eine unterscheidbare Zeichenfolge aufgeteilt, wobei zumindest die nicht-unterscheidbare Zeichenfolge zumindest teilweise nicht dargestellt wird. In anderen Worten bedeutet dies, dass gleiche, redundante Informationen bei der Darstellung zumindest teilweise weggelassen werden. Stattdessen wird der unterscheidbare Anteil der Zeichenfolge dargestellt.

Zweckmäßigerweise umfasst die dargestellte Zeichenfolge ganze Worte oder semantisch verständliche Wortbestandteile. Die verkürzte Darstellung eines Listeneintrags kann auch dergestalt sein, dass sinnvolle Abkürzung eines Worts oder einer Wortfolge gewählt werden. Beispielsweise kann das Wort "Bahnhof" durch "Bhf." abgekürzt werden. Ebenso ist eine Abkürzung des Worts "Straße" durch "Str." für einen Nutzer ohne Weiteres verständlich. Ein entsprechendes Abkürzungsverzeichnis könnte hierzu verwendet werden, das im Fahrzeug oder in einem über Online-Zugriff erreichbaren zentralen Speicher hinterlegt ist.

In einer weiteren zweckmäßigen Ausgestaltung wird ein aktiv ausgewählter Listeneintrag der nicht-unterscheidbaren Listeneinträge mehrzeilig dargestellt. Dies bedeutet, dass ein gemäß der vorherigen Beschreibung gekürzter Listeneintrag vollständig dargestellt wird, sobald dieser Listeneintrag zu einem aktiv ausgewählten Listeneintrag wird.

In einer anderen Variante wird zur Herstellung der Unterscheidbarkeit der aufeinander folgenden und im Bereich der zweiten Anzahl an Zeichen nicht-unterscheidbaren Listeneinträge der jeweils aktiv ausgewählte Listeneintrag in seiner Darstellung, d.h. gegenüber dem oder den anderen nicht-unterscheidbaren Listeneinträgen, verändert. Die dynamische Optimierung wird dabei nur auf dem jeweils aktiv ausgewählten Listeneintrag aktiv.

Gemäß einer ersten Variante kann der aktiv ausgewählte Listeneintrag mehrzeilig dargestellt werden. Insbesondere werden die nach dem aktiv ausgewählten Listeneintrag darzustellenden Listeneinträge um den für die Mehrzeiligkeit des aktiv ausgewählten Listeneintrags benötigten Platz nach unten verschoben. Eine ruhigere Anzeige ergibt sich dann, wenn der aktiv ausgewählte Listeneintrag den oder die folgenden Listeneinträge überblendet.

Ebenso kann der aktiv ausgewählte Listeneintrag in der oben beschriebenen Weise verkürzt dargestellt werden. Ebenso ist es möglich, dass der aktiv ausgewählte Listeneintrag an das Ende des Listeneintrags springt, was dem eingangs erläuterten "Flippen" entspricht.

Ein erfindungsgemäßer Rechner zur Steuerung einer Anzeigevorrichtung eines Fahrzeugs ist dazu eingerichtet, das erfindungsgemäße Verfahren auszuführen.

Die Erfindung wird nachfolgend näher anhand von Ausführungsbeispielen erläutert. Es zeigen:
- Fig. 1: den Anzeigebereich einer Anzeigevorrichtung mit einer Anzahl an Listeneinträgen, von denen eine Teilanzahl nicht eindeutig identifizierbar ist,
- Fig. 2: eine erste bekannte Variante zur kombinierten Darstellung vollständiger Informationen auf dem Anzeigebereich der Anzeigevorrichtung,
- Fig. 3: eine zweite bekannte Variante zur Darstellung vollständiger Informationen auf dem Anzeigebereich der Anzeigevorrichtung,
- Fig. 4: eine dritte bekannte Variante zur Darstellung vollständiger Informationen auf dem Anzeigebereich der Anzeigevorrichtung,
- Fig. 5: eine erste erfindungsgemäße Variante zur Darstellung von in Listenform vorliegenden Informationen, gemäß der gemischte ein- und mehrzeilige Listeneinträge dargestellt sind,
- Fig. 6: eine zweite Ausführungsvariante zum Darstellen von Informationen gemäß der eine Textlängenkürzung bei manchen Listeneinträgen vorgenommen ist,
- Fig. 7: eine dritte erfindungsgemäße Variante zum Darstellen von Informationen, gemäß der eine dynamische Mehrzeiligkeit vorgesehen ist,
- Fig. 8: eine vierte erfindungsgemäße Variante zum Darstellen von Informationen, gemäß der eine dynamische Mehrzeiligkeit vorgesehen ist,
- Fig. 9: eine fünfte erfindurlgsgemäße Ausführungsvariante, gemäß der ein aktiv ausgewählter Listeneintrag durch einen Wortende-Sprung visualisiert wird.

Das erfindungsgemäße Verfahren zum Darstellen von Informationen auf einer Anzeigevorrichtung eines Fahrzeugs, auf der die Informationen in Form einer Liste darstellbar sind, basiert darauf, Listeneinträge lediglich im Bedarfsfall unterscheidbar zu machen, d.h. wenn diese ohne aktives Zutun nicht voneinander unterscheidbar sind. Hierzu wird für die aktuell auf der Anzeigevorrichtung darzustellende Anzahl an Listeneinträgen ermittelt, ob jeweils zwei aufeinander folgende Listeneinträge jeweils eine Anzahl an Zeichen aufweisen, die größer als die darstellbare Anzahl des betreffenden Listeneintrags ist. Ist dies der Fall, so werden die Zeichen der aufeinander folgenden Listeneinträge hinsichtlich ihrer Unterscheidbarkeit verglichen. Wurde eine Nicht-Unterscheidbarkeit der zwei aufeinander folgenden und aktuell auf der Anzeigevorrichtung darzustellenden Listeneinträge im Bereich der darstellbaren Anzahl an Zeichen der Listeneinträge festgestellt, so wird eine Unterscheidbarkeit dieser beiden Listeneinträge hergestellt. Es versteht sich, dass dieser paarweise Vergleich aufeinander folgender Listeneinträge für sämtliche, jeweils aufeinander folgende zwei Listeneinträge, zumindest für die Anzahl der darzustellenden Listeneinträge oder für die gesamte Liste, durchgeführt wird.

Es erfolgt somit eine Änderung der Darstellung jeweiliger Listeneinträge nur bei solchen Listeneinträgen, bei denen bei zwei aufeinander folgenden und aktuell auf der Anzeigevorrichtung darzustellenden Listeneinträgen eine Nicht-Unterscheidbarkeit festgestellt wird. Dies bedeutet, ist ein Listeneintrag vollständig im Anzeigebereich der Anzeigevorrichtung erkennbar, so wird dieser hinsichtlich seiner Anzeige in keinem Fall verändert.

Eine Veränderung der Art der Darstellung von nicht-unterscheidbaren Listeneinträgen erfolgt in einer einfachsten Variante dann, wenn im Bereich der darstellbaren Anzahl an Zeichen der aufeinander folgenden Listeneinträge eine syntaktische Unterscheidbarkeit besteht.

Wenn in der vorliegenden Beschreibung von einem "Bereich der darstellbaren Anzahl an Zeichen" die Rede ist, so ist dies derart zu verstehen, dass dies diejenigen Zeichen sind, die vom ersten Zeichen der Zeichenfolge des Listeneintrags beginnen. Eine weiter verbesserte Art der Differenzierung von nicht-unterscheidbaren, aufeinander folgenden Listeneinträgen wird dann ermöglicht, wenn eine Analyse hinsichtlich einer semantischen Unterscheidbarkeit erfolgt.

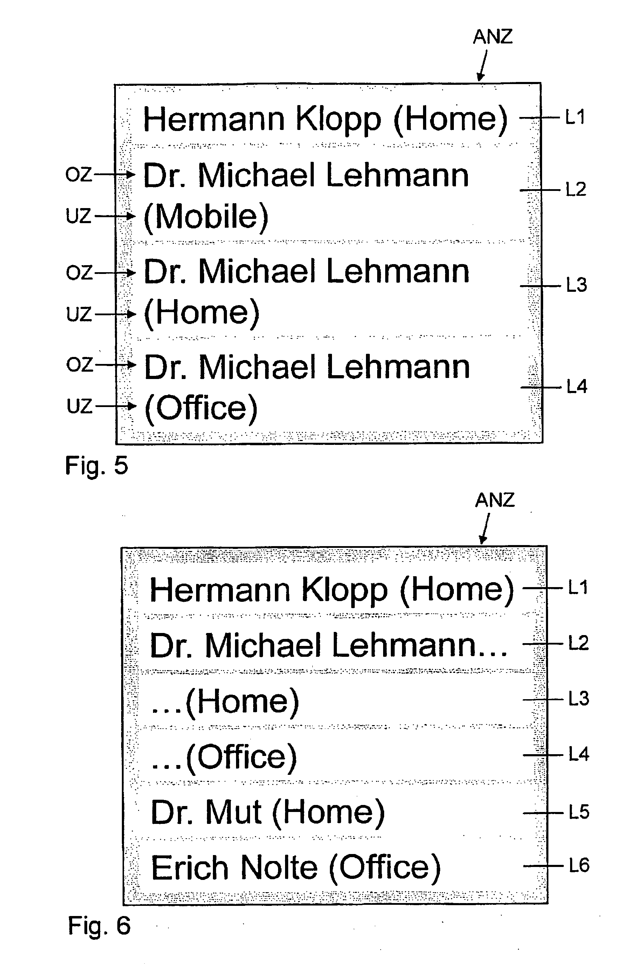

Fig. 5 zeigt eine erste Ausführungsvariante, bei der unabhängig davon, ob bzw. welcher Listeneintrag aktiv ausgewählt ist, eine Optimierung auf alle im Anzeigebereich der Anzeigevorrichtung ANZ dargestellten Listeneinträge L1, L2, L3, L4 erfolgt. In dem in Fig. 5 gezeigten Ausführungsbeispiel werden diejenigen Listeneinträge (hier: L2, L3, L4) mehrzeilig dargestellt, welche aufgrund ihrer Zeichenlänge nicht in einer einzigen Zeile darstellbar sind. Nachdem der Listeneintrag "Hermann Klopp (Home)" vollständig innerhalb einer Zeile darstellbar ist, wird dieser weiterhin einzeilig dargestellt. Demgegenüber benötigen die Listeneinträge L2, L3, L4 zur vollständigen Darstellung eine weitere Zeile, so dass diese jeweils zweizeilig mit einer oberen Zeile OZ und einer unteren Zeile UZ dargestellt sind. Der Vorteil dieser Vorgehensweise besteht darin, dass im Vergleich zu dem in Fig. 2 gezeigten Vorgehen eine größere Anzahl an Listeneinträgen darstellbar ist, wobei gleichzeitig eine gute Lesbarkeit für den Nutzer der Anzeigevorrichtung ANZ gegeben ist.

In dem in Fig. 6 gezeigten Ausführungsbeispiel wird die Differenzierung der Information bei maximaler Anzahl an Listeneinträgen dadurch erreicht, dass eine Textlängenkürzung vorgenommen ist. Die Textlängenkürzung betrifft die Listeneinträge L2, L3, L4. Dabei wurde bei den Listeneinträgen L3, L4 eine gleiche, im Listeneintrag L2 dargestellte Information weggelassen, während die für eine Unterscheidung sinnvollen Zeichen dargestellt sind. Durch die vorneweg gestellten Punkte ("...") wird dem Nutzer signalisiert, dass lediglich ein Teilausschnitt des vollständigen Listeneintrags dargestellt ist. Vorzugsweise wird die Textlängenkürzung derart vorgenommen, dass ganze Worte stehen bleiben, um die Verständlichkeit hoch zu halten. Gegebenenfalls kann eine Trennung auch innerhalb eines Worts sinnvoll sein, beispielsweise wenn ein langes Wort mit typischen Trennsymbolen, wie z.B. "_", "-", "." usw., versehen ist. Um die Verständlichkeit und Differenzierung der Listeneinträge weiter zu erhöhen, könnte der Listeneintrag L2, welcher lediglich eine Teilinformation des vollständigen Listeneintrags darstellt, auch zusätzlich zwei- bzw. mehrzeilig dargestellt werden.

Beispielsweise können identische Zeichenfolgen aufeinander folgender Listeneinträge auch kleiner dargestellt werden, während differenzierende Zeichenfolge größer bzw. in der Standardgröße dargestellt werden.

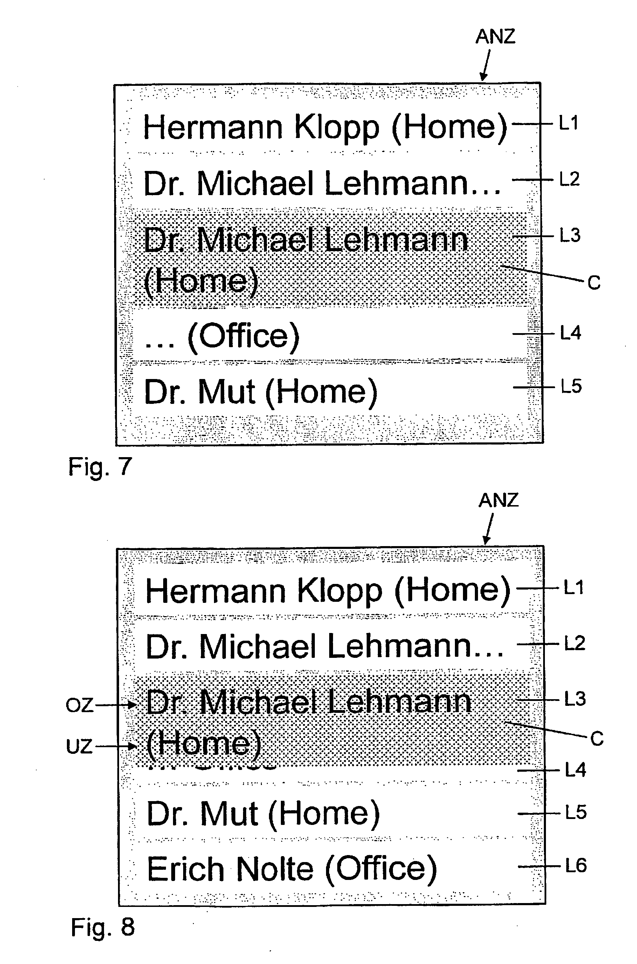

Die in den Figuren 7 bis 9 gezeigten Ausführungsbeispiele nutzen eine sog. dynamische Optimierung der Listeneinträge. Dies bedeutet, eine gegenüber der obigen Beschreibung weitere Optimierung der Anzeige eines Listeneintrags erfolgt dann, wenn der betreffende Listeneintrag aktiv ausgewählt ist.

Zwar liegt im Ausführungsbeispiel der Fig. 7 bei den Listeneinträgen L2, L3, L4 eine Unterscheidbarkeit vor. Allerdings möchte ein Nutzer unter Umständen eine genauere Information über einen Listeneintrag bekommen. Der grau unterlegte und mit C gekennzeichnete Listeneintrag L3 soll der aktiv ausgewählte Listeneintrag sein, der den Nutzer interessiert. In diesem Fall wird der Listeneintrag L3 mehrzeilig dargestellt. Die dem Listeneintrag L3 nachfolgenden Listeneinträge L4, L5, usw. verschieben sich nach unten, wodurch die Anzahl der insgesamt dargestellten Listeneinträge im Ausführungsbeispiel um 1 reduziert ist.

Da das Verschieben der auf einen aktiv ausgewählten Listeneintrag folgenden Listeneinträge zu einer unruhigen Anzeige führt, ist gemäß dem Ausführungsbeispiel der Fig. 8 vorgesehen, dass der aktiv ausgewählte Listeneintrag (hier wiederum Listeneintrag L3) den oder die nachfolgenden Listeneinträge überblendet bzw. überdeckt. Hierdurch findet keine Verschiebung der auf den Listeneintrag L3 nachfolgenden Listeneinträge statt, wodurch die Anzeige ruhiger bleibt und eine geringere Ablenkung die Folge ist.

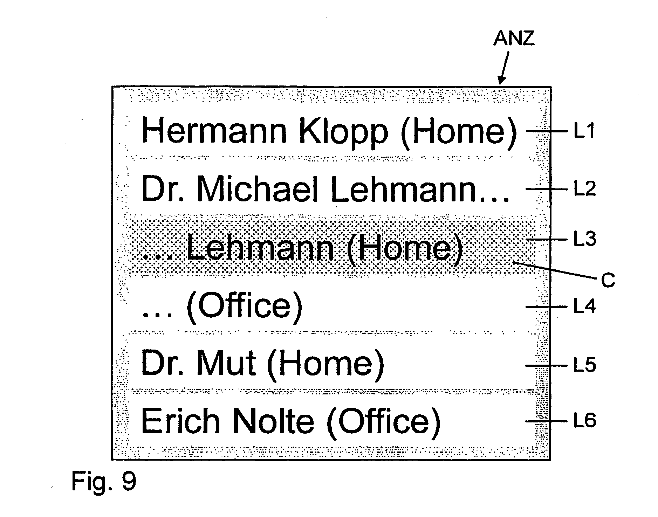

Fig. 9 zeigt das Ausführungsbeispiel, bei dem der aktiv ausgewählte Listeneintrag (hier L3, wiederum grau hinterlegt und mit C gekennzeichnet) an das Ende des Listeneintrags springt. Diese Vorgehensweise ist als "Flippen" bekannt.

Ebenso kann die dynamische Optimierung die oben erläuterte intelligente Textlängenkürzung umfassen. Insbesondere kann dabei vorgesehen sein, dass ein aktiv ausgewählter Listeneintrag der nicht-unterscheidbaren und gekürzten Listeneinträge dann mehrzeilig dargestellt wird, um dem Nutzer nach Auswahl des Listeneintrags die vollständige Infor mation zu vermitteln. Ebenso kann die Textlängenkürzung mit einem Sprung an den Beginn des Listeneintrags kombiniert sein.

### Bezugszeichenliste

- ANZ: Anzeigebereich der Anzeigevorrichtung
- L1: Listeneintrag
- L2: Listeneintrag
- L3: Listeneintrag
- L4: Listeneintrag
- L5: Listeneintrag
- L6: Listeneintrag
- Z: Zeichen
- C: aktiv ausgewählter Listeneintrag

## Patentansprüche

1. Verfahren zum Darstellen von Informationen auf einer Anzeigevorrichtung (ANZ) eines Fahrzeugs, auf der die Informationen in Form einer Liste bei gegebener Größe der Anzeigevorrichtung (ANZ) und vorgegebener Art und Größe der Schrift mit einer ersten Anzahl an Listeneinträgen (L1, L2, L3, L4, L5, L6) darstellbar sind, wobei jeder Listeneintrag eine zweite Anzahl an maximal darstellbaren Zeichen (Z) aufweist, bei dem
- für die aktuell auf der Anzeigevorrichtung (ANZ) darzustellende erste Anzahl an Listeneinträgen (L1, L2, L3, L4, L5, L6) ermittelt wird, ob jeweils zwei aufeinander folgende Listeneinträge (L1, L2, L3, L4, L5, L6) jeweils eine Anzahl an Zeichen (Z) aufweisen, die größer als die zweite, darstellbare Anzahl des betreffenden Listeneintrags (L1, L2, L3, L4, L5, L6) ist,
- im positiven Fall die darstellbare zweite Anzahl an Zeichen (Z) der aufeinander folgenden Listeneinträge (L1, L2, L3, L4, L5, L6) hinsichtlich ihrer Unterscheidbarkeit verglichen werden,
- bei festgestellter Nicht-Unterscheidbarkeit der zwei aufeinander folgenden und aktuell auf der Anzeigevorrichtung (ANZ) darzustellenden Listeneinträge (L1, L2, L3, L4, L5, L6) eine Unterscheidbarkeit dieser beiden Listeneinträge (L1, L2, L3, L4, L5, L6) hergestellt wird.

2. Verfahren nach Anspruch 1, bei dem eine Änderung der Darstellung jeweiliger Listeneinträge (L1, L2, L3, L4, L5, L6) nur bei solchen Listeneinträgen (L1, L2, L3, L4, L5, L6) erfolgt, bei denen bei zumindest zwei aufeinander folgenden und aktuell auf der Anzeigevorrichtung (ANZ) darzustellenden Listeneinträgen (L1, L2, L3, L4, L5, L6) eine Nicht-Unterscheidbarkeit festgestellt wird.

3. Verfahren nach Anspruch 1 oder 2, bei dem eine Nicht-Unterscheidbarkeit vorliegt, wenn im Bereich der zweiten Anzahl an Zeichen (Z) der aufeinander folgenden Listeneinträge (L1, L2, L3, L4, L5, L6) eine syntaktische Unterscheidbarkeit vorgegebener Art besteht.

4. Verfahren nach Anspruch 1 oder 2, bei dem eine Nicht-Unterscheidbarkeit vorliegt, wenn im Bereich der zweiten Anzahl an Zeichen (Z) der aufeinander folgenden Listeneinträge (L1, L2, L3, L4, L5, L6) eine semantische Unterscheidbarkeit besteht.

5. Verfahren nach einem der Ansprüche 1 bis 4, bei dem zur Herstellung der Unterscheidbarkeit der aufeinander folgenden und im Bereich der zweiten Anzahl an Zeichen (Z) nicht-unterscheidbaren Listeneinträge (L1, L2, L3, L4, L5, L6) die betreffenden Listeneinträge (L1, L2, L3, L4, L5, L6) in ihrer Darstellung verändert werden.

6. Verfahren nach Anspruch 5, bei dem die betreffenden Listeneinträge (L1, L2, L3, L4, L5, L6) jeweils mehrzeilig dargestellt werden.

7. Verfahren nach Anspruch 5 oder 6, bei dem zumindest manche der betreffenden Listeneinträge (L1, L2, L3, L4, L5, L6) verkürzt dargestellt werden.

8. Verfahren nach Anspruch 7, bei dem zur Verkürzung der betreffenden Listeneinträge (L1, L2, L3, L4, L5, L6) ein jeweiliger Listeneintrag in eine nichtunterscheidbare Zeichenfolge und eine unterscheidbare Zeichenfolge aufgeteilt wird, wobei zumindest die nicht-unterscheidbare Zeichenfolge zumindest teilweise nicht dargestellt wird.

9. Verfahren nach Anspruch 8, bei dem die dargestellte Zeichenfolge ganze Worte oder semantisch differenzierende Wortbestandteile umfasst.

10. Verfahren nach einem der Ansprüche 7 bis 9, bei dem ein aktiv ausgewählter Listeneintrag der nicht-unterscheidbaren Listeneinträge (L1, L2, L3, L4, L5, L6) mehrzeilig dargestellt wird oder an den Beginn eines Listeneintrags (L1, L2, L3, L4, L5, L6) springt.

11. Verfahren nach einem der Ansprüche 1 bis 4, bei dem zur Herstellung der Unterscheidbarkeit der aufeinander folgenden und im Bereich der zweiten Anzahl an Zeichen (Z) nicht-unterscheidbaren Listeneinträge (L1, L2, L3, L4, L5, L6) der jeweils aktiv ausgewählte Listeneintrag in seiner Darstellung verändert wird.

12. Verfahren nach Anspruch 11, bei dem der aktiv ausgewählte Listeneintrag mehrzeilig dargestellt wird.

13. Verfahren nach Anspruch 12, bei dem die nach dem aktiv ausgewählten Listeneintrag darzustellenden Listeneinträge (L1, L2, L3, L4, L5, L6) um den für die Mehrzeiligkeit des aktiv ausgewählten Listeneintrags (L1, L2, L3, L4, L5, L6) benötigten Platz nach unten verschoben werden.

14. Verfahren nach Anspruch 12, bei dem der aktiv ausgewählte Listeneintrag den oder die folgenden Listeneinträge (L1, L2, L3, L4, L5, L6) überblendet.

15. Verfahren nach Anspruch 11, bei dem der aktiv ausgewählte Listeneintrag verkürzt dargestellt wird.

16. Verfahren nach Anspruch 11, bei dem der aktiv ausgewählte Listeneintrag an das Ende des Listeneintrags (L1, L2, L3, L4, L5, L6) springt.

17. Rechner zur Steuerung einer Anzeigevorrichtung (ANZ) eines Fahrzeugs, welche dazu eingerichtet ist, das Verfahren gemäß einem der vorhergehenden Ansprüche auszuführen.

## Claims

1. A method for displaying information on a display device (ANZ) of a vehicle, on which the information can be displayed in the form of a list at a given size of the display device (ANZ) and a predetermined type and size of the font with a first number of list entries (L1, L2, L3, L4, L5, L6), wherein each list entry has a second number of maximally displayable characters (Z), in which
- for the first number of list entries (L1, L2, L3, L4, L5, L6) to be currently displayed on the display device (ANZ) it is determined whether two respective consecutive list entries (L1, L2, L3, L4, L5, L6) have a respective number of characters (Z), which is greater than the second, displayable number of the relevant list entry (L1, L2, L3, L4, L5, L6),
- in the affirmative case, the displayable second number of characters (Z) of the consecutive list entries (L1, L2, L3, L4, L5, L6) are compared with respect to their distinguishability,
- when an indistinguishability of the two consecutive list entries (L1, L2, L3, L4, L5, L6) to be currently displayed on the display device (ANZ) is determined, a distinguishability of these two list entries (L1, L2, L3, L4, L5, L6) is produced.

2. A method according to claim 1, wherein a change in the display of the respective list entries (L1, L2, L3, L4, L5, L6) only takes place in list entries (L1, L2, L3, L4, L5, L6) of the type in which an indistinguishability is determined in at least two consecutive list entries (L1, L2, L3, L4, L5, L6) to be currently displayed on the display device (ANZ).

3. A method according to claim 1 or 2, wherein an indistinguishability is present when a syntactic distinguishability of a predetermined type exists in the region of the second number of characters (Z) of the consecutive list entries (L1, L2, L3, L4, L5, L6).

4. A method according to claim 1 or 2, wherein an indistinguishability is present when a semantic distinguishability exists in the region of the second number of characters (Z) of the consecutive list entries (L1, L2, L3, L4, L5, L6).

5. A method according to any one of claims 1 to 4, wherein the relevant list entries (L1, L2, L3, L4, L5, L6) are changed with respect to their display to produce the distinguishability of the list entries (L1, L2, L3, L4, L5, L6) which are consecutive and indistinguishable in the region of the second number of characters (Z).

6. A method according to claim 5, wherein the relevant list entries (L1, L2, L3, L4, L5, L6) are, in each case, displayed in multiple lines.

7. A method according to claim 5 or 6, wherein at least some of the relevant list entries (L1, L2, L3, L4, L5, L6) are displayed abbreviated.

8. A method according to claim 7, wherein to abbreviate the relevant list entries (L1, L2, L3, L4, L5, L6), a respective list entry is divided into an indistinguishable character sequence and a distinguishable character sequence, wherein at least the indistinguishable character sequence is at least partially not displayed.

9. A method according to claim 8, wherein the displayed character sequence comprises whole words or semantically differentiated word components.

10. A method according to any one of claims 7 to 9, wherein an actively selected list entry of the indistinguishable list entries (L1, L2, L3, L4, L5, L6) is displayed in multiple lines or jumps to the beginning of a list entry (L1, L2, L3, L4, L5, L6).

11. A method according to any one of claims 1 to 4, wherein to produce the distinguishability of the list entries (L1, L2, L3, L4, L5, L6) which are consecutive and indistinguishable in the region of the second number of characters (Z), the respective actively selected list entry is changed with respect to its display.

12. A method according to claim 11, wherein the actively selected list entry is displayed in multiple lines.

13. A method according to claim 12, wherein the list entries (L1, L2, L3, L4, L5, L6) to be displayed after the actively selected list entry are displaced downward by the space required for the multiple line feature of the actively selected list entry (L1, L2, L3, L4, L5, L6).

14. A method according to claim 12, wherein the actively selected list entry fades over the following list entry/entries (L1, L2, L3, L4, L5, L6).

15. A method according to claim 11, wherein the actively selected list entry is displayed abbreviated.

16. A method according to claim 11, wherein the actively selected list entry jumps to the end of the list entry (L1, L2, L3, L4, L5, L6).

17. A processor for controlling a display device (ANZ) of a vehicle, which is set up to carry out the method according to any one of the preceding claims.

## Revendications

1. Procédé permettant de représenter des informations sur un dispositif d'affichage (ANZ) d'un véhicule automobile sur lequel peuvent être représentées des informations sous la forme d'une liste avec une dimension prédéfinie du dispositif d'affichage (ANZ) et une nature et des dimensions prédéfinies de l'écriture, avec un premier nombre d'inscriptions sur une liste (L1, L2, L3, L4, L5, L6) chaque inscription sur une liste comportant un second nombre de caractères (Z) pouvant être représentés au maximum, selon lequel :
- on détermine, pour le premier nombre d'inscriptions sur une liste (L1, L2, L3, L4, L5, L6) devant être actuellement représenté sur le dispositif d'affichage (ANZ) si deux inscriptions sur une liste (L1, L2, L3, L4, L5, L6) respectivement successives comportent respectivement un nombre de caractères (Z) qui est supérieur au second nombre pouvant être représenté de l'inscription sur une liste concernée (L1, L2, L3, L4, L5, L6),
- si tel est le cas, le second nombre de caractères (Z) pouvant être représenté de l'inscription sur une liste (L1, L2, L3, L4, L5, L6) suivante est comparé concernant la possibilité de distinguer ces caractères,
- dans le cas d'une impossibilité de distinction reconnue des deux inscriptions sur une liste (L1, L2, L3, L4, L5, L6) successives devant actuellement être représenté sur le dispositif d'affichage (ANZ) on fabrique une possibilité de distinction de ces deux inscriptions sur une liste (L1, L2, L3, L4, L5, L6).

2. Procédé conforme à la revendication 1, selon lequel une modification de la représentation d'une inscription sur une liste respective (L1, L2, L3, L4, L5, L6) n'est effectuée que pour des inscriptions sur une liste (L1, L2, L3, L4, L5, L6) pour lesquelles pour au moins deux inscriptions sur une liste (L1, L2, L3, L4, L5, L6) devant être actuellement représentées sur le dispositif d'affichage (ANZ) successives, on détermine une impossibilité de distinction.

3. Procédé conforme à la revendication 1 ou 2, selon lequel une impossibilité de distinction existe lorsque dans la zone du second nombre de caractères (Z) des inscriptions sur une liste (L1, L2, L3, L4, L5, L6) successives, il y a une possibilité de distinction de syntaxe de type prédéfini.

4. Procédé conforme à la revendication 1 ou 2, selon lequel une impossibilité de distinction existe lorsque dans la zone du second nombre de caractères (Z) des inscriptions sur une liste (L1, L2, L3, L4, L5, L6) successives, il existe une possibilité de distinction sémantique.

5. Procédé conforme à l'une des revendications 1 à 4, selon lequel pour obtenir la possibilité de distinction des inscriptions sur une liste (L1, L2, L3, L4, L5, L6) successives et ne pouvant pas être distinguées dans la zone du second nombre de caractères (Z), la représentation des inscriptions sur une liste concernées (L1, L2, L3, L4, L5, L6) est modifiée.

6. Procédé conforme à la revendication 5, selon lequel les inscriptions sur une liste (L1, L2, L3, L4, L5, L6) concernées sont respectivement représentées sur plusieurs lignes.

7. Procédé conforme à la revendication 6, selon lequel au moins certaines des inscriptions sur une liste (L1, L2, L3, L4, L5, L6) concernées sont représentées de manière abrégée.

8. Procédé conforme à la revendication 7, selon lequel pour abréger les inscriptions sur une liste (L1, L2, L3, L4, L5, L6) concernées on répartit une inscription sur une liste respective en une suite de caractères ne pouvant pas être distingués et une suite de caractères pouvant être distingués, au moins la suite de caractères ne pouvant pas être distingués étant au moins partiellement non représentée.

9. Procédé conforme à la revendication 8, selon lequel la suite de caractères représentée renferme des mots entiers ou des éléments de mots pouvant être différenciés de manière sémantique.

10. Procédé conforme à l'une des revendications 7 à 9, selon lequel une inscription sur une liste choisie activement parmi les inscriptions sur une liste ne pouvant être distinguées (L1, L2, L3, L4, L5, L6) est représentée sur plusieurs lignes, ou saute au début d'une inscription sur une liste (L1, L2, L3, L4, L5, L6).

11. Procédé conforme à l'une des revendications 1 à 4, selon lequel pour obtenir la possibilité de distinguer les inscriptions sur une liste (L1, L2, L3, L4, L5, L6) successives et ne pouvant pas être distinguées dans la zone du second nombre de caractères (Z) on modifie la représentation de l'inscription sur une liste activement choisie.

12. Procédé conforme à la revendication 11, selon lequel l'inscription sur une liste activement choisie est représentée sur plusieurs lignes.

13. Procédé conforme à la revendication 12, selon lequel les inscriptions sur une liste (L1, L2, L3, L4, L5, L6) devant être représentées après l'inscription sur une liste activement choisie sont décalées vers le bas de la place nécessaire pour permettre la multiplicité de lignes de l'inscription sur une liste (L1, L2, L3, L4, L5, L6) activement choisie.

14. Procédé conforme à la revendication 12, selon lequel l'inscription sur une liste actuellement choisie s'enchaine avec la ou les inscription(s) sur une liste (L1, L2, L3, L4, L5, L6) suivante(s).

15. Procédé conforme à la revendication 11, selon lequel l'inscription sur une liste activement choisie est représentée en abrégé.

16. Procédé conforme à la revendication 11, selon lequel l'inscription sur une liste activement choisie saute à la fin de l'inscription sur une liste (L1, L2, L3, L4, L5, L6).

17. Ordinateur de commande d'un dispositif d'affichage (ANZ) d'un véhicule qui est conçu pour mettre en oeuvre le procédé conforme à l'une des revendications précédentes.
